# EUROPÄISCHE PATENTSCHRIFT

(11) **EP 1 433 247 B1**
(45) Veröffentlichungstag und Bekanntmachung des Hinweises auf die Patenterteilung: **27.12.2006**
(21) Anmeldenummer: 02772334.5
(22) Anmeldetag: 20.09.2002
(51) Int. Cl.: H02P 7/00, D03D 51/12, G05B 13/02

(54) **VERFAHREN ZUM ANTREIBEN UND ANTRIEB FÜR EINE MASCHINE**
METHOD FOR DRIVING A MACHINE AND DRIVE FOR SAID MACHINE
PROCEDE POUR ENTRAINER UNE MACHINE ET ENTRAINEMENT DESTINE A CETTE MACHINE

(30) Priorität: 04.10.2001 DE 10149756
(43) Veröffentlichungstag der Anmeldung: 30.06.2004
(73) Patentinhaber: Picanol N.V., 8900 Ieper (BE)
(72) Erfinder: ADRIAN, Marc, B-8902 Hollebeke (BE); VANDENBROUCKE, Andre, B-8930 Menen (BE); NOPPE, Chris, B-8770 Ingelmunster (BE)
(74) Vertreter: Patentanwälte Ruff, Wilhelm, Beier, Dauster & Partner
(86) Internationale Anmeldenummer: PCT/EP2002/010614
(87) Internationale Veröffentlichungsnummer: WO 2003/032481

(56) Entgegenhaltungen:
- EP-A- 0 198 248
- EP-A- 0 635 931
- EP-A- 0 802 270
- DE-A- 19 914 131
- US-A- 5 306 993

## Beschreibung

Die Erfindung betrifft ein Verfahren zum Antreiben einer Maschine, die wenigstens ein Bauteil aufweist, das eine periodische Bewegung ausführt und die einen elektrischen Antriebsmotor enthält, der abhängig von der periodischen Bewegung mit sich ändernder Drehgeschwindigkeit rotiert, dessen Drehwinkelpositionen erfasst werden und dem entsprechend seiner jeweiligen Drehwinkelposition gesteuert elektrische Energie zugeführt wird, und einen Antrieb mit einem elektrischen Antriebsmotor und einer zugeordneten Steuerung.

Ein Verfahren und ein Antrieb der eingangs genannten Art sind aus der WO 99/27 426 bekannt. Da der Antriebsmotor an die Maschine ständig ein Drehmoment abgibt, das bevorzugt konstant gehalten wird, folgt der Antriebsmotor dem durch Trägheitsmomente der Maschine vorgegebenen Drehzahlverhalten. Wenn die Trägheitsmomente der Maschine zu einer Geschwindigkeitsreduzierung führen, so macht der Antriebsmotor das ebenso mit, wie wenn das Trägheitsmoment zu einer Erhöhung der Maschinengeschwindigkeit führt. Die Schwankungen der Drehgeschwindigkeit der Maschine werden dadurch vergrößert. Üblicherweise ist das für die Funktion der Maschine unschädlich, beispielsweise für die Funktion einer Webmaschine. Es kann jedoch die Gefahr bestehen, dass die Geschwindigkeiten und/oder die Beschleunigungen so hoch werden, dass die Gefahr von Beschädigungen auftritt. Außerdem kann die Gefahr auftreten, dass die Drehgeschwindigkeit der Maschine derart stark schwankt, dass die Synchronisation verlorengeht, z.B. der Schusseintrag bei Luftdüsenwebmaschinen mit der Fachbildung.

Das US-Patent Nummer 5,306,993 zeigt ein Verfahren nach dem Oberbegriff des Anspruchs 1.

Der Erfindung liegt die Aufgabe zugrunde, ein Verfahren der eingangs genannten Art so weiterzubilden, dass die Schwankungen der Drehgeschwindigkeit reduziert werden, ohne dass der energetische Wirkungsgrad verschlechtert wird.

Diese Aufgabe wird durch die Merkmale des Anspruchs 1 gelöst.

Da die Stromzufuhr in Phasen zunehmender Geschwindigkeit wesentlich reduziert oder unterbrochen wird, steigt insgesamt die Geschwindigkeit weniger an. Das geringere Ansteigen der Drehgeschwindigkeit bewirkt dann auch, dass die Drehgeschwindigkeit nicht auf ganz so niedrige Werte absinkt, so dass insgesamt die Schwankungen der Drehgeschwindigkeit reduziert werden.

Bei einem Antrieb wird das Problem durch die Merkmale des Anspruchs 8 gelöst.

Weitere Merkmale und Vorteile der Erfindung ergeben sich aus der nachfolgenden Beschreibung und den Unteransprüchen.
- Fig. 1: zeigt in schematischer Darstellung einen Antrieb für eine Webmaschine, der erfindungsgemäß gesteuert wird und
- Fig. 2: ein Diagramm zur Erläuterung des Verlaufs der Drehgeschwindigkeit der Maschine während einer Umdrehung und des Verlaufs der gesteuerten Zufuhr von elektrischer Energie zu dem Antriebsmotor.

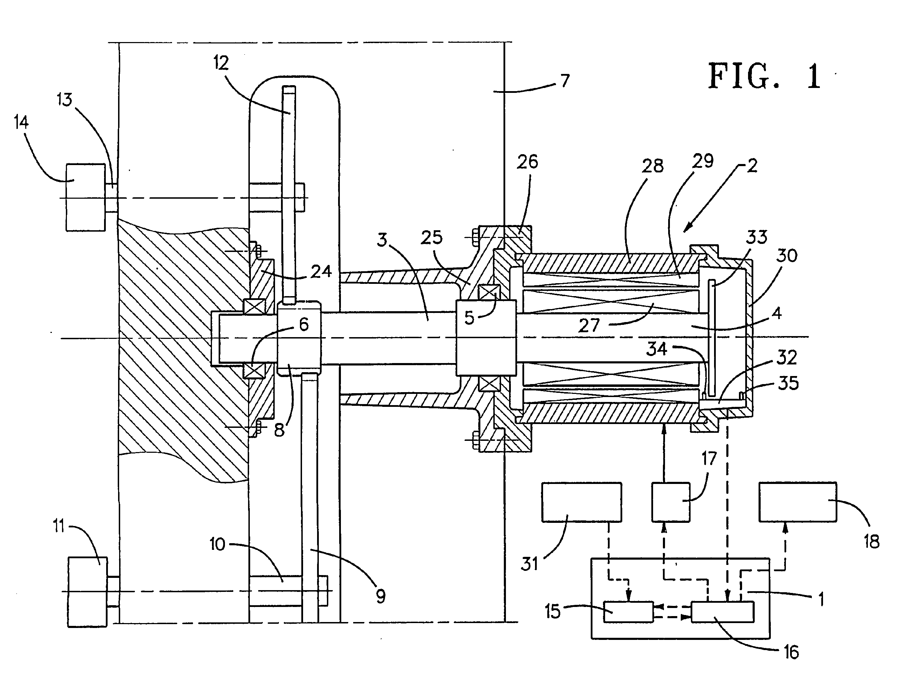

Der in Fig. 1 dargestellte Antrieb einer Webmaschine enthält eine Steuereinheit 1, die einen Antriebsmotor 2 steuert. Der Antriebsmotor 2 treibt die Hauptantriebswelle 3 der Webmaschine an. Die Motorwelle 4 und die Hauptantriebswelle 3 sind bei dem dargestellten Ausführungsbeispiel einteilig ausgeführt. Die Hauptantriebswelle 3 ist mittels Lagern 5, 6 in einem Rahmen 7 der Webmaschine gelagert.

Auf der Hauptantriebswelle 3 ist drehfest ein Schaltrad 8 angeordnet, das mit einem Antriebsrad 9 kämmt. Das Antriebsrad 9 ist drehfest auf einer Welle 10 angeordnet, die erste Antriebselemente 11 antreibt, beispielsweise Antriebselemente für Fachbildungsmittel. Das Schaltrad 8 kämmt außerdem mit einem zweiten Antriebszahnrad 12, das drehfest auf einer Antriebswelle 13 von zweiten Antriebselementen 14 angeordnet ist, die beispielsweise die Antriebselemente für eine Weblade und - bei Greiferwebmaschinen - die Antriebselemente der Greifer sind.

Um das an der Hauptantriebswelle 3 wirkende Antriebsdrehmoment zu begrenzen, ist der Durchmesser des Schaltrades 8 kleiner als der Durchmesser der Antriebsräder 9, 12. Das Antriebsrad 12 dreht sich pro Schusseintrag einmal. Das Antriebsrad 9 der Antriebselemente dreht sich in der gleichen Zeit beispielsweise nur um eine halbe Umdrehung, da die Fachbildungsmittel bei einem Schusseintrag nur einen halben Zyklus durchlaufen. Aus diesem Grund ist der Durchmesser des Antriebsrades 9 doppelt so groß wie der Durchmesser des Antriebsrades 12.

Das Lager 6 ist zwischen dem Webmaschinenrahmen 7 und einem mit Schrauben daran befestigten Flansch 24 angeordnet. Das Lager 5 befindet sich zwischen einem Flansch 25, der Teil des Webmaschinenrahmens 7 ist, und einem mit Schrauben daran befestigten Flansch 26. Der Rotor 27 des Antriebsmotors 2 ist drehfest auf der Motorwelle 4 befestigt, die - wie schon gesagt - einteilig mit der Hauptantriebswelle 3 ausgebildet ist. Der in einem Gehäuse 28 angeordnete Stator 29 des Antriebsmotors 2 ist mittels des Flansches 26 an dem Webmaschinenrahmen 7 angebracht. Hierzu ist das Gehäuse 28 mit einem Gewinde versehen, das in ein Gewinde des Flansches 26 eingeschraubt ist. Der Flansch 26 hält den Stator 29 zentrisch zu dem Rotor 27. Das Gehäuse 28 weist ein zweites, mit einem Gewinde versehenes Ende auf, auf das ein mit einem Gewinde versehener Flansch 30 geschraubt ist, der die Stirnseite des Antriebsmotors 2 staubdicht abschließt. Als Antriebsmotor 2 wird ein schaltbarer Reluktanzmotor eingesetzt, bei welchem in jeder Winkelposition eine bestimmte Wicklung an die Stromzufuhr angeschlossen werden kann, um eine gesteuerte elektrische Energie zuzuführen, d.h. ein bezüglich Amplitude und Frequenz gesteuerten Strom.

Die Steuereinheit 1 enthält wenigstens einen Speicher 15 und eine Auswerteeinrichtung 16. An die Steuereinheit 1 sind eine Eingabeeinheit 31, eine Anzeigeeinheit 18 und ein Sensor 32 angeschlossen. Der Sensor 32 arbeitet mit einer Encoderscheibe 33 zusammen, die auf der Motorwelle 4 angeordnet ist. Bei einer abgewandelten Ausführungsform sind die Encoderscheibe 33 und der Sensor 32 auf der Hauptantriebswelle 3 der Maschine angebracht. Mittels der Signale des Sensors 32 kann die Steuereinheit die Winkelposition und die Drehzahl der Motorwelle 4 bestimmen. Der Sensor 32 enthält beispielsweise einen Lichtsender 34 und einen auf der anderen Seite der Encoderscheibe 33 angeordneten Empfänger. Die Encoderscheibe ist mit an definierten Stellen vorgesehenen lichtdurchlässigen Stellen versehen, so dass Strahlen des Lichtsenders 34 dann zu dem Empfänger 35 gelangen. Selbstverständlich können auch Sensoren vorgesehen werden, die nach einem anderen Arbeitsprinzip arbeiten.

Die Zuführung von elektrischer Energie zu dem Antriebsmotor 2 wird von der Steuereinheit 1 mittels eines Steuerungssystems 17 gesteuert. Das Steuerungssystem 17 ist beispielsweise eine elektronisch geregelte Stromquelle oder Leistungsstufe, die lastunabhängig Strom mit vorwählbarer Amplitude und vorwählbarer Frequenz liefern kann.

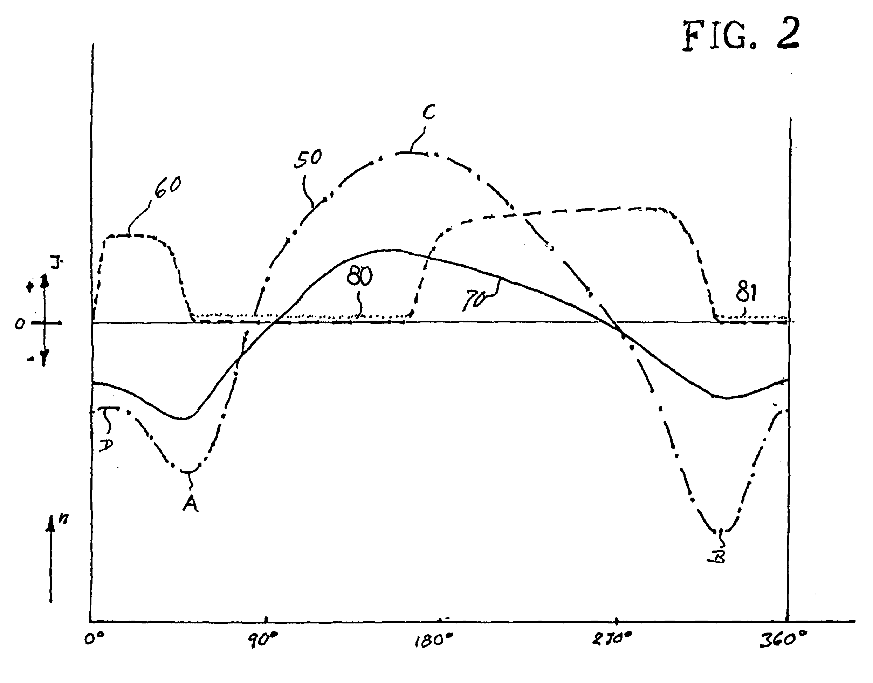

Wenn der Antriebsmotor 2 so gesteuert wird, wie das in der WO 99/27 426 beschrieben ist, beispielsweise so, dass er ständig ein konstantes Drehmoment an die Maschine abgibt, so ergibt sich eine Drehgeschwindigkeitsverlauf über 360° entsprechend der Kurve 50 in Fig. 2. Die Kurve 50 zeigt, dass die Drehgeschwindigkeit relativ stark schwankt. Dies liegt daran, dass der Antriebsmotor 2 dem von den Massenträgheitsmomenten der Maschine bestimmten Geschwindigkeitsverlauf folgt und diesen verstärkt. Diese Schwankungen der Drehgeschwindigkeit werden erfindungsgemäß dadurch verringert, dass die Zufuhr von Energie in den Phasen unterbrochen wird, in welchen die Drehgeschwindigkeit zunimmt. Dies sind die Scheitelpunkte A und B der Kurve 50. Das Wiedereinschalten der Energiezufuhr erfolgt an den Scheitelpunkten C und D, an welchen sich der Verlauf der Drehgeschwindigkeit wieder umkehrt, d.h. die Drehgeschwindigkeit wieder abnimmt. Der Verlauf der Energiezufuhr ist in Fig. 2 mit einer Kurve 60 dargestellt. Die Drehzahlschwankungen lassen sich dadurch erheblich reduzieren, wie mit der Kurve 70 in Fig. 2 dargestellt ist. Wie in Fig. 2 dargestellt ist, erfolgt das Abschalten der Energiezufuhr zu den Scheitelpunkten A und B nicht abrupt, sondern mit einem abfallenden Verlauf. Dadurch wird ein sanfter, ruckfreier Übergang erhalten. Ebenso erfolgt das Wiedereinschalten der Energiezufuhr mit einem ansteigenden Verlauf, so dass auch hier sanfte Übergänge erhalten werden. Zweckmäßigerweise wird dabei vorgesehen, dass das Abschalten der Energiezufuhr bereits begonnen wird, bevor der Verlauf der Drehgeschwindigkeit nach der Kurve 50 die unteren Scheitelpunkte A und B erreicht. Ebenso wird zweckmäßig vorgesehen, dass auch das Wiedereinschalten der Energiezufuhr gestartet wird, bevor die oberen Scheitelpunkte D und C erreicht werden. Hier ist anzumerken, dass es nicht notwendig ist, dass das Unterbrechen der Energieversorgung und das Wiedereinschalten exakt auf die Scheitelpunkte A, B, C und D abgestimmt ist. Selbst wenn hierbei Fehler auftreten, d.h. dass das Unterbrechen zu früh oder zu spät geschieht und auch das Wiedereinschalten zu früh oder zu spät geschieht, keine wesentlichen Fehler auftreten. Es wird dennoch eine deutlichere Verringerung der Schwankungen der Drehgeschwindigkeit erhalten. Da die Energiezufuhr dann unterbrochen wird, wenn die Drehgeschwindigkeit des Antriebsmotors 2 sich erhöht, wird es notwendig, dass dann mehr Energie zugeführt wird, wenn die Drehgeschwindigkeit sinkt, da insgesamt der Energieverbrauch gleich ist, um eine bestimmte Durchschnittsgeschwindigkeit zu erhalten. Gemäß der Erfindung wird dabei weiter vorgesehen, dass die Energiezuführung auf einen Maximalwert begrenzt wird.

Um die Phasen zu erkennen, bei welchen die Drehgeschwindigkeit zunimmt, werden entsprechende Drehwinkel in der Steuerung abgespeichert. Dies geschieht in der Weise, dass die Webmaschine eingeschaltet und mit einer vorgegebenen Geschwindigkeit betrieben wird. Dann wird die Energiezufuhr vollständig unterbrochen, so dass dann die Maschinen mit ihrer "natürlichen" Drehgeschwindigkeit weiterläuft, d.h. mit einem Geschwindigkeitsverlauf ohne Energiezufuhr. Dieser Geschwindigkeitsverlauf wird als eine Standardkurve oder Sollkurve für die "natürliche" Drehgeschwindigkeit in einem Mikroprozessor abgespeichert. Damit sind in dem Mikroprozessor auch Daten abgespeichert, die die Scheitelpunkte A, B, C und D repräsentieren, in welchen sich der Geschwindigkeitsverlauf umkehrt, d.h. die Drehgeschwindigkeit zunimmt und wieder abnimmt.

Danach wird die Maschine so gestartet, wie dies in der WO 99/27 426 beschrieben ist. Der Mikroprozessor steuert dabei die dem Antriebsmotor 2 zugeführte Energie so, dass der Verlauf der Drehgeschwindigkeit dem Standardverlauf entspricht. In dem Bereich der Scheitelpunkte A und B und bevorzugt mit einem Vorlauf wird die Energiezufuhr unterbrochen. Die Winkelpositionen, zu welchen das Abschalten und später das Wiedereinschalten der Energiezufuhr endgültig festgelegt werden, kann mittels Überprüfen des Verlaufs, der Drehgeschwindigkeit und mittels eines Vergleiches mit dem Standardverlauf korrigiert werden. Da jedoch die Energiezufuhr auf einen Maximalwert begrenzt ist, wird es zwangsläufig Abweichungen zwischen dem Standardverlauf oder dem Sollverlauf und dem tatsächlichen Verlauf oder lstverlauf der Drehgeschwindigkeit geben. Nach eine bevorzugten Ausführungsform wird die Steuerung deshalb so ausgelegt, dass nach einer gewissen Zeit des Webens der erhaltene Istverlauf der Drehgeschwindigkeit als neuer Sollverlauf genommen wird. Damit wird dann eine exakte Einregelung auf diesen korrigierten Sollverlauf erhalten. Danach kann die Steuerung ohne weiteres auf das Verfahren übergehen, das in der WO 99/27 426 beschrieben worden ist. In diesem Fall werden die Daten so abgespeichert, dass der Antriebsmotor 2 nach einem vorgegebenen, an die Maschine abzugebenden Drehmoment gesteuert wird. Zur Sicherheit kann dann auch noch vorgesehen werden, dass Geschwindigkeitsänderungen erfasst werden und dass dann, wenn ein Schwellwert der Geschwindigkeitsänderungen überschritten wird, die Steuerung wieder auf die vorher erläuterte Regelung der Geschwindigkeit übergeht. Dieses Vorgehen ist vorteilhaft für den Mikroprozessor der Steuerung, da dieser nicht ständig die zuzuführenden Energiewerte berechnen muß, sondern abgespeicherte Werte verwenden kann.

Selbstverständlich kann auch auf die vorstehend erläuterte Geschwindigkeitsregelung verzichtet und nur die Steuerung nach dem abzugebenden Drehmoment entsprechend der WO 99/27 426 mit der Maßgabe angewandt werden, dass in Phasen ansteigender Drehgeschwindigkeit die Energiezufuhr unterbrochen wird.

Um eine Reduzierung der Schwankung an Drehgeschwindigkeit zu erhalten, ist es nicht notwendig, in jeder Phase zunehmender Drehgeschwindigkeit das Zuführen elektrischer Energie zu unterbrechen. Ebenso ist es umgekehrt auch nicht notwendig, dass immer und in allen Phasen abnehmenden Drehgeschwindigkeit Energie zugeführt wird.

Wie in Fig. 2 mittels gepunkteten Linien 80 und 81 gezeigt ist, wird bereits dann das angestrebte Ergebnis erzielt, wenn die Energiezufuhr zu den Scheitelpunkten A und B nicht vollständig unterbrochen sondern nur wesentlich reduziert wird, d.h. auf weniger als 20 % und vorzugsweise auf weniger als 10 % bis 5 %.

## Patentansprüche

1. Verfahren zum Antreiben einer Maschine, die wenigstens ein Bauteil aufweist, das eine periodische Bewegung ausführt, und die einen elektrischen Antriebsmotor (2) enthält, der ein schaltbarer Reluktanzmotor ist, dessen Wicklungen entsprechend der jeweiligen Winkelposition elektrische Energie gesteuert zuführbar ist, um abhängig von der periodischen Bewegung des wenigstens einen Bauteils mit sich ändernder Drehgeschwindigkeit zu rotieren, wozu Drehwinkelpositionen des Antriebsmotors erfasst werden und den Wicklungen entsprechend der jeweiligen Drehwinkelposition gesteuert Energie zugeführt wird,
**dadurch gekennzeichnet, dass** zunächst ein Geschwindigkeitsverlauf der Maschine als eine Standardkurve für die natürliche Drehgeschwindigkeit ermittelt wird und Daten abgespeichert werden, die die Scheitelpunkte der natürlichen Drehgeschwindigkeit repräsentieren, dass daraus Phasen zunehmender Drehgeschwindigkeit ermittelt werden und dass für die Dauer dieser Phasen das Zuführen von Energie unterbrochen oder die Energiezufuhr auf einen konstanten Wert reduziert wird.

2. Verfahren nach Anspruch 1, **dadurch gekennzeichnet, dass** die Phasen zunehmender Drehgeschwindigkeit an der laufenden Maschine ermittelt werden, nachdem die Zufuhr elektrischer Energie vollständig abgeschaltet worden ist.

3. Verfahren nach einem der Ansprüche 1 bis 2, **dadurch gekennzeichnet, dass** das Unterbrechen der Energiezufuhr mit einem abfallenden Verlauf der Energiezufuhr durchgeführt wird.

4. Verfahren nach einem der Ansprüche 1 bis 3, **dadurch gekennzeichnet, dass** das Wiedereinschalten der Energiezufuhr mit einem ansteigenden Verlauf der Energiezufuhr ausgeführt wird.

5. Verfahren nach einem der Ansprüche 1 bis 4, **dadurch gekennzeichnet, dass** die Energiezufuhr auf einen Maximalwert begrenzt wird.

6. Verfahren nach einem der Ansprüche 1 bis 5, **dadurch gekennzeichnet, dass** die Energiezufuhr in Abhängigkeit von einem Sollverlauf der Drehgeschwindigkeit erfolgt.

7. Verfahren nach einem der Ansprüche 1 bis 5, **dadurch gekennzeichnet, dass** die Energiezufuhr zu dem Antriebsmotor (2) in Abhängigkeit von einem Sollverlauf eines von dem Antriebsmotor (2) abzugebenden Drehmomentes erfolgt.

8. Antrieb für eine Maschine mit wenigstens einem Bauteil, das eine periodische Bewegung ausführt, und mit einem elektrischen Antriebsmotor (2), der abhängig von dem Bauteil mit periodischer Bewegung mit sich ändernder Drehgeschwindigkeit rotiert, mit Mitteln zum Erfassen der Drehwinkelposition des Antriebsmotors (2) und mit Mitteln zum gesteuerten Zuführen elektrischer Energie entsprechend seiner jeweiligen Drehwinkelposition,
**dadurch gekennzeichnet, dass** eine Steuerung (1) zur Durchführung des Verfahrens nach Anspruch 1 vorgesehen ist.

9. Antrieb nach Anspruch 8, **dadurch gekennzeichnet, dass** die Steuerung (1) einen Speicher (15) für Daten der Drehwinkelpositionen von Phasen zunehmender Drehgeschwindigkeit enthält.

10. Antrieb nach Anspruch 8 oder 9, **dadurch gekennzeichnet, dass** die Steuerung (1) einen Speicher (15) für Daten von Drehwinkelpositionen mit entsprechend einem Sollverlauf eines abzugebenden Drehmoments und/oder entsprechend eines Sollverlauf der Drehgeschwindigkeit dem Antriebsmotor zuzuführender elektrische Energie enthält.

## Claims

1. A method for driving a machine comprising at least one periodically moving part and including an electric drive motor (2) which is a switchable reluctance motor to the windings of which electrical energy may be supplied in a controlled way according to the respective angular position to rotate with variable rotating speed as a function of the periodical movement of the at least one part , for which angular positions of the drive motor are acquired and the windings are supplied with energy in a controlled way, in relation with the respective angular position, **characterized in that** first a speed course of the machine is acquired as a standard curve for the natural angular speed and data are stored representing the peaks of the natural angular speed, that phases of growing angular speed are acquired hereon and that for the duration of these phases, energy supply is interrupted or reduced to a constant value.

2. Method as claimed in claim 1, **characterized in that** the phases of increasing angular speed are completely ascertained while the machine operates after interruption of applied electric power.

3. Method as claimed in either of claims 1 through 2, **characterized in that** the interruption of applied power is gradual.

4. Method as claimed in one of claims 1 through 3, **characterized in that** the re-application of power is gradual.

5. Method as claimed in one of claims 1 through 4, **characterized in that** the application of power is limited to a maximum value.

6. Method as claimed in one of claims 1 through 5, **characterized in that** the applied power follows a nominal angular speed variation.

7. Method as claimed in one of claims 1 through 5, **characterized in that** power applied to the drive motor (2) follows a natural course of torque output of the motor (2).

8. Drive system for a machine comprising at least one periodically moving part and including an electric drive motor (2) which is rotating with variable angular speed, as a function of the periodically moving part, comprising means for detecting the angular position of the drive motor (2) and comprising means for the supply with electrical energy in a controlled way according to its respective angular position, **characterized in that** a control means (1) is provided for carrying out the method as claimed in claim 1.

9. Drive system as claimed in claim 8, **characterized in that** the control unit (1) includes a memory (15) storing data of the phases of increasing angular speed.

10. Drive system as claimed in either of claims 8 or 9, **characterized in that** control unit (1) includes a memory (15) storing data of angular positions and the corresponding natural course of torque to be applied and/or the electrical power which will be applied to the drive motor corresponding to a natural course of the angular speed.

## Revendications

1. Procédé d'entraînement d'une machine comprenant au moins un élément réalisant un mouvement périodique et comportant un moteur d'entraînement électrique (2) qui est un moteur à réluctance commutable dont les enroulements sont susceptibles d'être approvisionnés en énergie électrique de manière contrôlée, selon la position angulaire correspondante, pour tourner à vitesse de rotation variable, en fonction du mouvement périodique de l'au moins un élément, processus pour lequel des positions angulaires du moteur d'entraînement sont retenues et les enroulements sont approvisionnés en énergie de manière contrôlée, en fonction de la position angulaire correspondante,
**caractérisé en ce que** d'abord, on retient un tracé de la vitesse de la machine pour le retenir comme courbe standard relative à la vitesse de rotation naturelle, tout en mémorisant des données représentant les crêtes de la vitesse de rotation naturelle et en déduit des phases de vitesse de rotation croissante et que pour la durée desdites phases, on coupe l'alimentation en énergie ou la réduit à une valeur constante.

2. Procédé selon la revendication 1, **caractérisé en ce que** les phases de vitesse de rotation progressive sont reprises sur la machine en marche après coupure complète de l'alimentation en énergie électrique.

3. Procédé selon l'une des revendications 1 à 2, **caractérisé en ce que** la coupure de l'alimentation en énergie se fait avec une alimentation en énergie décroissante.

4. Procédé selon l'une des revendications 1 à 3, **caractérisé en ce que** la reprise de l'alimentation en énergie se fait avec une alimentation en énergie croissante.

5. Procédé selon l'une des revendications 1 à 4, **caractérisé en ce que** l'alimentation en énergie est limitée à une valeur maxi.

6. Procédé selon l'une des revendications 1 à 5, **caractérisé en ce que** l'alimentation en énergie est fonction d'une évolution nominale de la vitesse de rotation.

7. Procédé selon l'une des revendications 1 à 5, **caractérisé en ce que** l'approvisionnement du moteur d'entraînement (2) en énergie se fait en fonction d'une évolution nominale du couple de rotation à fournir par le moteur d'entraînement (2).

8. Mécanisme d'entraînement destiné à une machine comportant au moins un élément exécutant un mouvement périodique, et comprenant un moteur d'entraînement électrique (2) tournant à vitesse de rotation variable en fonction du composant à mouvement périodique, comportant des moyens de détection de la position angulaire du moteur d'entraînement (2) et des moyens permettant l'alimentation en énergie électrique contrôlée conformément à sa position angulaire correspondante,
**caractérisé en ce qu'**un mécanisme de contrôle (1) destinée à commander la mise en oeuvre du procédé selon la revendication 1 est prévu.

9. Mécanisme d'entraînement selon la revendication 8, **caractérisé en ce que** le mécanisme de contrôle (1) comprend une mémoire (15) destinée à stocker des données des positions angulaires de phases à vitesse de rotation croissante.

10. Mécanisme d'entraînement selon la revendication 8 ou 9, **caractérisé en ce que** le mécanisme de contrôle (1) comprend une mémoire (15) destinée à stocker des données de positions angulaires comprenant l'approvisionnement du moteur d'entraînement en énergie électrique qui est fonction d'une évolution nominale d'un couple de rotation à fournir et/ou d'une évolution
